# EUROPÄISCHE PATENTSCHRIFT

(11) **EP 1 721 245 B1**
(45) Veröffentlichungstag und Bekanntmachung des Hinweises auf die Patenterteilung: **22.08.2007**
(21) Anmeldenummer: 05716770.2
(22) Anmeldetag: 23.02.2005
(51) Int. Cl.: G06F 3/033

(54) **VERFAHREN ZUR AUSWAHL EINES LISTENEINTRAGS UND INFORMATIONS- ODER UNTERHALTUNGSSYSTEM, INSBESONDERE FÜR KRAFTFAHRZEUGE**
METHOD FOR SELECTING A LIST ITEM AND INFORMATION OR ENTERTAINMENT SYSTEM, ESPECIALLY FOR MOTOR VEHICLES
PROCEDE POUR SELECTIONNER UN ELEMENT DE LISTE ET SYSTEME D'INFORMATION OU DE DIVERTISSEMENT, EN PARTICULIER POUR VEHICULES AUTOMOBILES

(30) Priorität: 01.03.2004 DE 102004010406
(43) Veröffentlichungstag der Anmeldung: 15.11.2006
(73) Patentinhaber: SIEMENS AKTIENGESELLSCHAFT, 80333 München (DE)
(72) Erfinder: AIELLO, Demetrio, 93197 Zeitlarn (DE); NGUYEN THIEN, Nhu, 93057 Regensburg (DE)
(86) Internationale Anmeldenummer: PCT/EP2005/050766
(87) Internationale Veröffentlichungsnummer: WO 2005/083968

(56) Entgegenhaltungen:
- EP-A- 1 061 714
- WO-A-02/10900
- US-A- 6 157 372
- US-A1- 2002 016 669
- US-A1- 2002 103 641
- CARLSON S ET AL: "APPLICATION OF SPEECH RECOGNITION TECHNOLOGY TO ITS ADVANCED TRAVELER INFORMATION SYSTEMS" PACIFIC RIM TRANSTECH CONFERENCE. VEHICLE NAVIGATION AND INFORMATION SYSTEMS CONFERENCE PROCEEDINGS. WASHINGTON, JULY 30 - AUG. 2, 1995, NEW YORK, IEEE, US, Bd. CONF. 6, 30. Juli 1995 (1995-07-30), Seiten 118-125, XP000641143 ISBN: 0-7803-2588-5

## Beschreibung

Die Erfindung betrifft ein Verfahren zur Auswahl eines Listeneintrags aus einer Auswahlliste, insbesondere in einem Informations- oder Unterhaltungssystem eines Kraftfahrzeugs, wobei wahlweise ein gesuchter Listeneintrag in einem Spracheingabemodus durch Spracheingabe oder in einem manuellen Eingabemodus manuell eingegeben wird. Weiterhin betrifft die Erfindung ein Informations- oder Unterhaltungssystem, insbesondere eines Kraftfahrzeuges, mit einem Speichermodul zur Speicherung einer Vielzahl von Listeneinträgen, einer manuellen Eingabevorrichtung zur manuellen Eingabe eines gesuchten Listeneintrags, einer Spracheingabe- und einer Sprachverarbeitungsvorrichtung, einem Umschaltmodul zum Umschalten zwischen einem manuellen Eingabemodus und einem Spracheingabemodus und einem Auswahlmodul zur Auswahl eines der Listeneinträge anhand des zumindest teilweise über die manuelle Eingabevorrichtung oder die Spracheingabevorrichtung eingegebenen gesuchten Listeneintrags.

Als Informations- oder Unterhaltungssysteme eines Kraftfahrzeugs sind beispielsweise Autoradios, Navigationssysteme, Fernsehempfänger und Multimediasysteme bekannt und im Einsatz. Multimediasysteme beinhalten dabei mehrere Komponenten wie z. B. ein Audiosystem, ein Navigationssystem, ein Videosystem oder eine Telefonfreisprecheinrichtung. Zur Bedienung der Informations- oder Unterhaltungssysteme eines Kraftfahrzeuges ist es häufig erforderlich, in einem menüartigen System oder aus einer Liste Einträge auszuwählen. Beispielsweise muss der Benutzer eines Kraftfahrzeugnavigationssystems zu Beginn den gewünschten Zielort festlegen. Hierzu ist in der Regel die Eingabe zumindest einer Ortsangabe und zumeist auch eine Straßenangabe erforderlich. Auch zum Führen eines Telefongesprächs muss zunächst die Telefonnummer oder der gewünschte Teilnehmer aus einer Liste ausgewählt oder eingegeben werden. Dies erfolgt zurzeit zumeist über manuelle Bedienelemente. Beispielsweise wird nach Aufruf der zugehörigen Funktion eine virtuelle Schreibmaschine eingeblendet. Über ein oder mehrere Bedienelemente, beispielsweise einen Dreh- /Drücksteller oder eine Zwölfertastatur gibt der Benutzer die Anfangsbuchstaben des gesuchten Stadt- oder Straßennamens oder den Namen des gesuchten Gesprächpartners ein- Es sind verschiedene Konzepte entwickelt worden, um den Eingabevorgang zu beschleunigen. Beispielsweise werden nur noch solche Buchstaben für die weitere Eingabe angeboten, die in Ergänzung zu den bereits eingegebenen Buchstaben eine Zeichenkette ergeben, zu der ein Listeneintrag vorliegt.

Aus der DE 101 20 691 A1 ist eine manuelle Eingabevorrichtung bekannt, mit der der Eingabevorgang weiter vereinfacht wird. Dort wird ein Bedienelement beschrieben, in das ein so genanntes "Touchpad", also eine Anordnung mit einer berührungsempfindlichen Oberfläche, integriert ist. Das Touchpad wird zur Schrifterkennung genutzt, so dass der Benutzer direkt Buchstaben oder Ziffern oder sonstige Zeichen auf dem Touchpad eingeben kann. Ein gesuchter Stadtname kann daher einfach buchstabenweise geschrieben werden. Durch das bewegliche Bedienelement können dann weitere Funktionen ausgewählt werden. Eine derartige Eingabevorrichtung erfordert bereits einen sehr geringen Aufmerksamkeitsgrad des Bedieners und lenkt daher nur wenig vom Verkehrsgeschehen ab.

Darüber hinaus sind in der Technik allgemein Spracheingabesysteme bekannt. Mit Hilfe eines Spracherkenners und den dazugehörigen Verarbeitungsmodulen kann ein bestimmter Name erkannt und mit Listeneinträgen verglichen werden. Der Erkennungsgrad derartiger Systeme ist jedoch noch nicht besonders hoch. Dies liegt zum einen an der unterschiedlichen Sprechweise der verschiedenen Benutzer, bei Verwendung im Kraftfahrzeug jedoch auch daran, dass der Störgeräuschpegel in der Regel relativ hoch ist. Zudem erfordern die großen zu speichernden und zu verarbeitenden, strukturierten Datenmengen leistungsstarke Prozessoren mit einer hohen Speicher- und Rechenkapazität. Bei Benutzung im Kraftfahrzeug sind daher beispielsweise umfangreiche Dialogstrategien erforderlich, wobei der Benutzer vom System beispielsweise die Frage gestellt wird, in welcher Umgebung einer großen Stadt der gesuchte Ort liegt. Die Vorteile einer schnellen Eingabe, die Spracherkennungssysteme an sich bieten, geht durch einen derartigen Dialog und ein relativ häufiges Scheitern der Suche wieder verloren.

Beispielsweise wird in der DE 197 17 601 A1 ein Navigationsverfahren mit Spracheingabe beschrieben.

Aus der DE 199 14 631 A1 ist ein Verfahren zur Eingabe von Buchstaben und/oder Zahlen in ein Fahrerinformationssystem bekannt, bei dem die Eingabe sowohl über eine manuelle Eingabevorrichtung oder über eine Spracheingabevorrichtung erfolgen kann. Auch die Spracheingabe eines gesuchten Eintrags erfolgt bei diesem System zeichenweise, das heißt, es werden nicht vollständige Worte,gesprochen, sondern einzelne Buchstaben und/oder Zahlen. Der Benutzer kann hierbei auch während der Eingabe eines einzigen Suchbegriffes zwischen der manuellen Eingabe und der Spracheingabe wechseln. Nachteilig ist hierbei jedoch die erforderliche zeichenweise Spracheingabe des gesuchten Begriffes.

In der US 2002/016669 A1 wird ein Navigationsverfahren und -System mit manueller Eingabe und Spracheingabe beschrieben.

Aufgabe der Erfindung ist es daher, ein Verfahren zur Auswahl eines Listeneintrags anzugeben, das eine weiter vereinfachte Eingabe und gleichzeitig auch ein verbessertes Zusammenspiel des Spracheingabemodus und des manuellen Eingabemodus bewirkt. Eine weitere Aufgabe besteht darin, ein Informations- oder Unterhaltungssystem anzugeben, das ebenfalls eine verbesserte Eingabemöglichkeit aufweist.

Die beiden Aufgaben werden durch ein Verfahren mit den Merkmalen des Anspruchs 1 bzw. ein Informations- oder Unterhaltungssystems mit den Merkmalen des Anspruchs 5 gelöst.

Erfindungsgemäß wird hierbei ein manueller Eingabemodus zur Eingabe des gesuchten Listeneintrags mit einem Spracheingabemodus kombiniert, bei dem der gesuchte Listeneintrag als gesprochenes Wort eingegeben wird. Hierdurch ergibt sich gegenüber einer zeichenweisen Eingabe im Spracheingabemodus, wie sie bei dem bekannten System eingesetzt wird, der Vorteil einer vereinfachten Spracheingabe. Auf einen umfangreichen Dialog zwischen dem Benutzer und dem System, wie er eingangs für Spracheingabesysteme mit wortweiser Spracheingabe genannt wurde, wird hierbei verzichtet. Wird der gesprochene Listeneintrag nicht mit hinreichender Genauigkeit identifiziert bzw. kein entsprechender Eintrag in der Auswahlliste gefunden, so wird erfindungsgemäß automatisch in den manuellen Eingabemodus umgeschaltet. In diesem manuellen Eingabemodus kann der Benutzer nun die ersten Buchstaben oder Ziffern des gesuchten Listeneintrags eingeben und die Suche des Listeneintrags in der Auswahlliste wird anhand der eingegebenen Zeichen durchgeführt. Das erfindungsgemäße Verfahren führt also in den Fällen, in denen der Spracheingabe mit hinreichender Genauigkeit mindestens einer der Listeneinträge der Auswahlliste als Suchergebnis zugeordnet werden kann, zu einem schnellen Auffinden des gesuchten Listeneintrags. Wird der gesuchte Listeneintrag dabei eindeutig identifiziert, so ist das Eingabeverfahren abgeschlossen. Werden beispielsweise zwei ähnliche Listeneinträge gefunden, so reicht eine kurze Rückfrage beim Benutzer aus, um zu einem eindeutigen Ergebnis zu gelangen. Wird dagegen der gewünschte Listeneintrag aufgrund der Spracheingabe nicht identifiziert, so erfolgt durch das automatische Umschalten in den manuellen Eingabemodus ein schneller Übergang in den in diesem Fall geeigneteren Eingabemodus.

Besonders bevorzugt ist hierbei, dass im manuellen Eingabemodus der gesuchte Listeneintrag mittels einer Handschrifteingabevorrichtung buchstabenweise eingegeben wird. Die buchstabenweise Eingabe über eine Handschrifteingabevorrichtung, wie sie beispielsweise aus der eingangs erwähnten DE 101 20 691 A1 bekannt ist, stellt eine schnelle Möglichkeit der manuellen Eingabe des gesuchten Listeneintrags dar. Ein umständliches An- und Auswählen von Buchstaben mittels eines Dreh- und Drückstellers oder einer, im Kraftfahrzeug meist mit mehreren Buchstaben belegten Tastatur ist nicht erforderlich. Die wortweise Spracheingabe in Kombination mit einer Handschrifteingabevorrichtung in der erfindungsgemäßen automatischen Verknüpfung stellt ein Verfahren zur Auswahl eines Listeneintrags dar, das den Fahrer nur sehr wenig vom Verkehrsgeschehen ablenkt. Die Handschrifterkennungsvorrichtung weist dabei eine berührungsempfindliche Fläche auf, die vorzugsweise in einen Drehsteller integriert ist oder auch als so genannter "Touchscreen" Teil einer optischen Ausgabevorrichtung ist.

In einer besonderen Ausführungsform ist vorgesehen, dass nach Eingabe jedes Buchstabens über die Handschriftschrifteingabevorrichtung eine optische oder akustische Rückmeldung erfolgt. Der Benutzer kann daher auf einfache Weise kontrollieren, ob das von ihm eingegebene Zeichen richtig erkannt wurde. Als Zeichen kommen dabei insbesondere Buchstaben und Ziffern infrage.

In einer speziellen Ausgestaltung des Verfahrens ist vorgesehen, dass eine bereits manuell eingegebene Zeichenkette automatisch mit den Listeneinträgen der Auswahlliste verglichen wird und die Anzahl M der Listeneinträge ermittelt wird, die die eingegebene Zeichenkette als Anfangsbestandteil enthält. Weiterhin wird ermittelt, ob die Anzahl M kleiner als ein Vorgabewert X und größer als 1 ist, und falls dies zutreffend ist werden die Listeneinträge, die die eingegebene Zeichenkette als Anfangsbestandteil enthalten, auf einer optischen Anzeigevorrichtung zur Auswahl angeboten. Zusätzlich oder alternativ wird in den Spracheingabemodus umgeschaltet.

Die Anzahl M kann beispielsweise die auf einer Anzeigevorrichtung anzeigbare Anzahl der Zeilen sein. In diesem Fall kann der Benutzer dann einfach einen der angezeigten Listeneinträge auswählen, beispielsweise mittels eines Dreh- /Drückstellers.

Alternativ wird in den Spracheingabemodus umgeschaltet, wenn die Anzahl M der noch infrage kommenden Listeneinträge kleiner als der Vorgabewert ist. In diesem Fall handelt es sich bei dem Vorgabewert beispielsweise um den maximalen Wortschatz des Spracherkennungsvorrichtung. Erst dann, wenn der maximale Wortschatz der Spracherkennungsvorrichtung größer oder gleich der Anzahl der noch zur Verfügung stehenden Auswahlmöglichkeiten ist, wird in den Spracheingabemodus umgeschaltet. Der Benutzer wird dann aufgefordert, den gesuchten Listeneintrag per Spracheingabe einzugeben. Aufgrund der dann nur relativ geringen Anzahl an noch möglichen Listeneinträgen, ist die Erkennungswahrscheinlichkeit größer und es kann ein Spracherkennungssystem mit relativ geringer Kapazität eingesetzt werden. Dies ist gerade für die Anwendung in Kraftfahrzeugen unter Kostengesichtspunkten vorteilhaft.

In einer weiteren Ausführungsform der Erfindung ist vorgesehen, dass vor dem automatischen Umschalten von dem Spracheingabemodus in den manuellen Eingabemodus das gesprochene Wort als Spracheingabesignal abgespeichert wird. Durch diese Ausgestaltung der Erfindung kann das gesprochene Wort in einem späteren Stadium der Eingabe jederzeit wieder herangezogen werden. Insbesondere ist dazu vorgesehen, dass ein Vergleich des abgespeicherten Spracheingabesignals mit denjenigen Listeneinträgen der Auswahlliste durchgeführt wird, deren Anfangsbestandteil mit der manuell eingegebenen Zeichenkette übereinstimmt, wenn die Anzahl der so ermittelten Listeneinträge kleiner als ein Vorgabewert S ist. Bei hinreichender Übereinstimmung mit einem der Listeneinträge der Auswahlliste wird dieser Listeneintrag ausgewählt und ein Hinweis auf die Auswahl optisch oder akustisch ausgegeben. Bei hinreichend kleiner Anzahl an noch möglichen Listeneinträgen kann mit dieser Verfahrensvariante auf die weitere manuelle Eingabe zusätzlicher Zeichen oder die nochmalige Spracheingabe verzichtet und der gesuchte Listeneintrag schnell gefunden werden.

In einer Ausgestaltung des Informations- oder Unterhaltungssystems ist vorgesehen, dass dies ein Navigationssystem ist oder enthält und die Listeneinträge Ortsangaben sind. In einer anderen Variante ist vorgesehen, dass das Informations- oder Unterhaltungssystem ein Audio- und/oder Videosystem ist oder enthält und die Listeneinträge Senderfrequenzen oder Sendernamen oder Telefonnummern oder Musik- bzw. Videotitel sind. Gerade bei den genannten Anwendungen bzw. Kategorien treten häufig eine Vielzahl von Listeneinträgen auf, so dass hier ein effizientes Auswahlverfahren besonders gefordert wird.

Das erfindungsgemäße Verfahren ist nicht auf den Einsatz in Kraftfahrzeugen beschränkt. Vielmehr kann es insbesondere auch bei Auskunftssystemen für Fahr- oder Flugpläne oder Fahrkarten öffentlicher Verkehrsmittel oder zur Touristeninformation eingesetzt werden. Als weiteres Anwendungsgebiet kommen auch Anwendungen in Auskunftssystemen von Banken und dergleichen in Frage.

Im manuellen Eingabemodus kann die Eingabe handschriftlich oder auch über eine Tastatur erfolgen, beispielsweise auch über ein Touchscreen oder eine zu Schreibmaschinen ähnliche, gegebenenfalls virtuelle, Tastatur.

Die Erfindung wird nachfolgend anhand eines Ausführungsbeispiels beschrieben. Es zeigen:
- Fig. 1:: ein Ablaufdiagramm des erfindungsgemäßen Verfahrens,
- Fig. 2:: die wesentlichen Systemkomponenten eines erfindungsgemäßen Informations- oder Unterhaltungssystems.

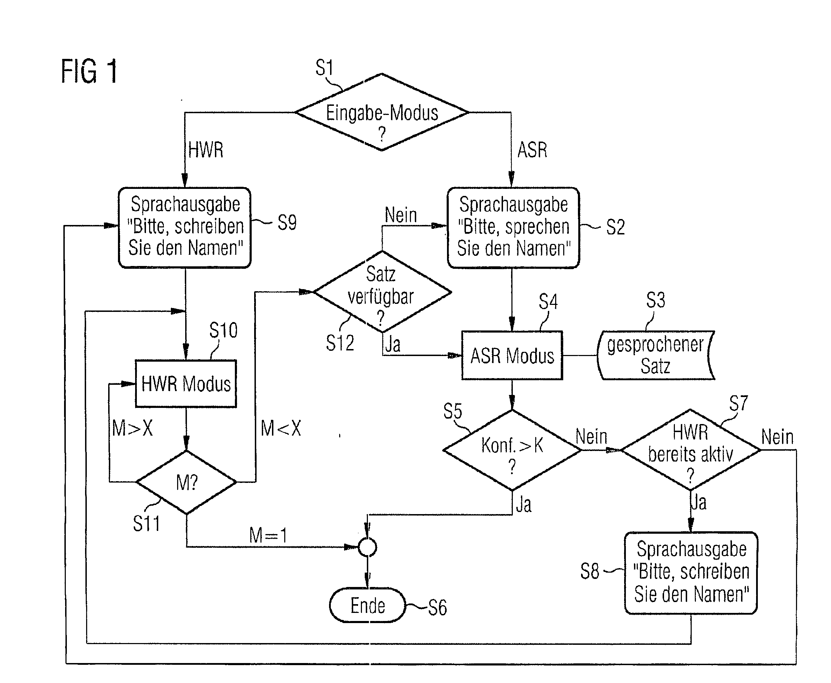

Fig. 1 zeigt ein Flussdiagramm eines erfindungsgemäßen Verfahrensablaufs. In Schritt S1 initiiert der Benutzer den Suchvorgang entweder für die handschriftliche Eingabe oder für eine Spracheingabe. Hat sich der Benutzer über Spracheingabe entschieden, so wird er in Schritt S2 aufgefordert, den gesuchten Listeneintrag zu sprechen. In Schritt S3 spricht der Benutzer den gesuchten Listeneintrag, wobei das gesprochene Wort als Eingabesignal dient. In Schritt S4 erfolgt die Aktivierung der Sprachverarbeitungsvorrichtung, wobei in an sich bekannter Weise das gesprochene Wort mit den Listeneinträgen verglichen wird. Hierbei wird die Übereinstimmung des gesprochenen Worts mit einem oder mehreren Listeneinträgen jeweils durch ein Konfidenz-Niveau festgelegt. Dieses Konfidenz-Niveau wird in Schritt S5 mit einem Vorgabewert K verglichen. Ist das Konfidenz-Niveau größer als der Vorgabewert, das heißt, es besteht eine hinreichende Übereinstimmung zwischen dem gesprochenen, gesuchten Listeneintrag und einem der Listeneinträge aus der Auswahlliste, so wurde der gesuchte Listeneintrag bereits eindeutig gefunden und das Eingabeverfahren wird in Schritt S6 beendet.

Wird in Schritt S5 dagegen festgestellt, dass keine hinreichende Übereinstimmung zwischen dem gesprochenen gesuchten Listeneintrag und einem der Listeneinträge aus der Auswahlliste besteht, so wird in Schritt S7 geprüft, ob die Handschrifterkennungsvorrichtung bereits aktiviert ist. Ist dies nicht der Fall, so wird in Schritt S9 die Handschrifterkennungsvorrichtung aktiviert und der Benutzer aufgefordert, den gesuchten Listeneintrag in die Handschrifterkennungsvorrichtung einzugeben. Wird in Schritt S7 dagegen festgestellt, dass die Handschrifterkennungsvorrichtung bereits aktiviert ist, so wird in Schritt S8 der Benutzer zwar ebenfalls aufgefordert, den gesuchten Listeneintrag dort manuell einzugeben, die Aktivierung der Handschrifterkennungsvorrichtung kann jedoch dann unterbleiben. In beiden Fällen wird die Eingabe im Handschrifteingabemodus in Schritt S10 fortgesetzt.

In Schritt S10 gibt der Benutzer nun buchstabenweise den gesuchten Listeneintrag in die Handschrifterkennungsvorrichtung ein. Mit jedem eingegebenen Buchstaben verringert sich die Zahl der noch möglichen Listeneinträge. Nach jeder Zeicheneingabe wird in Schritt S11 die Zahl dieser noch möglichen Listeneinträge bestimmt und mit einem Vorgabewert verglichen. Ist die Zahl der möglichen Listeneinträge noch größer als dieser Vorgabewert, so muss weiterhin die Eingabe weiterer Buchstaben im Schritt S10 erfolgen.

Wird in Schritt S11 festgestellt, dass nur noch ein möglicher Listeneintrag zur Verfügung steht, so ist dieser Listeneintrag der gesuchte Listeneintrag und das Eingabeverfahren wird in Schritt S6 beendet.

Wird in Schritt S11 festgestellt, dass die Zahl der noch möglichen Listeneinträge kleiner als der Vorgabewert X ist, der in diesem Fall dem maximalen Wortschatz der Spracherkennungsvorrichtung entspricht, so wird in Schritt S12 geprüft, ob der gesuchte Listeneintrag bereits per Spracheingabe eingegeben und abgespeichert wurde. Wird in Schritt S12 festgestellt, dass ein derartiger Datensatz verfügbar ist, so wird in Schritt S4 im Sprachmodus geprüft, ob der per Spracheingabe eingegebene Suchbegriff mit einem der noch möglichen Listeneinträge übereinstimmt. In Schritt S5 wird hierzu in bereits zuvor beschriebener Weise wieder ein Konfidenz-Niveau festgelegt und abhängig davon, ob einer der noch möglichen Listeneinträge mit hinreichender Übereinstimmung identifiziert werden kann, das Eingabeverfahren im Schritt S6 beendet bzw. in Schritt S7 wiederum in den manuellen Einmodus gewechselt.

Wird in Schritt S12 festgestellt, dass kein Sprachsignal abgespeichert wurde, was insbesondere dann der Fall ist, wenn nicht mit dem Spracheingabemodus sondern mit dem Handschrifteingabemodus begonnen wurde, so erfolgt in Schritt S2 die Aufforderung, den gesuchten Listeneintrag per Spracheingabe einzugeben. Das Verfahren wird dann in Schritt S4 in der zuvor beschriebenen Weise fortgesetzt, wobei wiederum die bereits eingeschränkte Untermenge der noch möglichen Listeneinträge aufgrund der Handschrifteingabe zugrunde gelegt wird.

Das Verfahren wurde, beginnend mit einer Spracheingabe beschrieben. Entscheidet sich der Benutzer dagegen in Schritt S1 nicht dafür, mit der Sprachausgabe zu beginnen, so wird er in Schritt S9 aufgefordert, den gesuchten Listeneintrag über die Handschrifteingabevorrichtung einzugeben. Das nachfolgende Verfahren läuft dann so ab, wie zuvor für die Handschrifteingabe nach erfolgter Umschaltung aus dem Spracheingabemodus beschrieben.

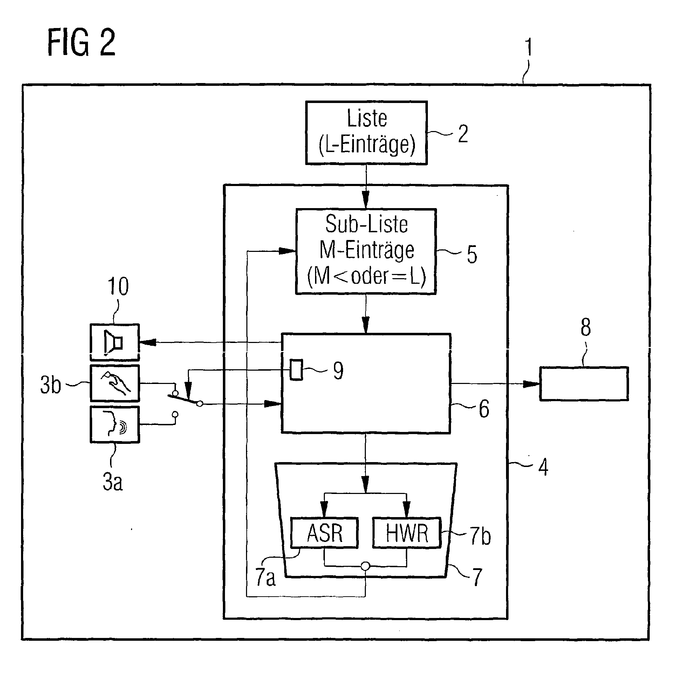

Fig. 2 zeigt die wesentlichen Elemente eines Informations- oder Unterhaltungssystems eines Kraftfahrzeugs, sofern sie für die Durchführung der Auswahl eines Listeneintrags von Bedeutung sind. Spezifische Elemente des jeweiligen Informations- oder Unterhaltungssystems werden dabei nicht gezeigt, da sie dem Fachmann hinreichend bekannt sind. Beispielsweise enthält ein Navigationssystem Mittel zur Positionsbestimmung, Mittel zur Routenberechnung und Mittel zur Ausgabe von Fahrhinweisen an einen Benutzer.

Das in Fig. 2 dargestellte Informations- oder Unterhaltungssystem 1 weist als Eingabemittel eine Spracheingabevorrichtung 3a sowie eine manuelle Eingabevorrichtung 3b auf. Die manuelle Eingabevorrichtung 3b weist eine berührungsempfindliche Oberfläche auf und ist als Handschrifterkennungsvorrichtung ausgebildet. In einem Speichermodul 2 ist mindestens eine Liste mit mehreren Listeneinträgen abgespeichert. Im Falle des Ausführungsbeispiels enthält das Speichermodul Listeneinträge mit Ortsnamen für ein Navigationssystem. In einem weiteren Speicherelement 5 wird eine Kopie oder eine Untermenge der im Speichermodul 2 abgespeicherten Liste zwischengespeichert- Ein Interaktionsmanager 6, der im Wesentlichen als Computerprogramm vorliegt, verarbeitet die von der Spracheingabevorrichtung 3a und der Handschrifteingabevorrichtung 3b kommenden Eingangssignale und steuert über das Umschaltmodul 9 das Umschalten zwischen dem Handschrifteingabemodus und dem Spracheingabemodus, wie es zuvor im Zusammenhang mit Fig. 1 beschrieben wurde. Weiterhin steuert der Interaktionsmanager 6 die Ausgabe einer akustischen Rückmeldung über die akustische Ausgabeeinheit 10.

Der Interaktionsmanager 6 übernimmt schließlich auch die Weiterleitung eines gefundenen Listeneintrags an die weiteren Komponenten des Informations- oder Unterhaltungssystems 1, im Ausführungsbeispiel gemäß Fig. 2 an ein Routenberechnungsmodul 8 eines Navigationssystems. Wie oben bereits erwähnt, sind die weiteren Komponenten eines derartigen Navigationssystems an sich bekannt und in Fig. 2 nicht weiter aufgeführt.

Der Interaktionsmanager 6 steht in Verbindung mit einem Filtermodul 7, das ein Sprachverarbeitungsmodul 7a und ein Handschriftverarbeitungsmodul 7b aufweist. Im Filtermodul 7 erfolgt die Filterung der Listeneinträge der Auswahlliste anhand der über die Spracheingabevorrichtung 3a bzw. die manuelle Eingabevorrichtung 3b eingegebenen, gesuchten Listeneintrags. Wie zuvor im Zusammenhang mit Fig. 1 beschrieben, wird dabei die Zahl der möglichen Listeneinträge anhand einer beispielsweise bereits eingegebenen Zeichenkette aus der Gesamtmenge der Listeneinträge der Auswahlliste herausgefiltert und im Speicherelement 5 abgespeichert. Das Speicherelement 5 enthält somit zu Beginn eines Suchverfahrens in der Regel eine komplette temporäre Kopie der vollständigen Auswahlliste, mit zunehmender Eingrenzung des Suchbegriffs durch Eingabe einer Zeichenkette, jedoch nur noch eine Untermenge der Auswahlliste. Das Sprachverarbeitungsmodul 7a und das Handschriftverarbeitungsmodul 7b sind für sich gesehen jeweils bekannt.

Mit der Erfindung wird die Auswahl eines Listeneintrags aus einer Auswahlliste insbesondere in einem Informations- oder Unterhaltungssystem eines Kraftfahrzeugs weiter vereinfacht und die Ablenkung des Fahrers vom Fahrgeschehen minimiert, wobei die Vorteile eines vereinfachten Spracheingabemodus und eines Handschrifterkennungsmodus kombiniert wurden.

## Patentansprüche

1. Verfahren zur Auswahl eines Listeneintrags aus einer Auswahlliste, insbesondere in einem Informations- oder Unterhaltungssystem eines Kraftfahrzeugs, wobei wahlweise ein gesuchter Listeneintrag in einem Spracheingabemodus durch Spracheingabe oder in einem manuellen Eingabemodus manuell eingegeben wird, wobei
- im Spracheingabemodus der gesuchte Listeneintrag als gesprochenes Wort eingegeben wird,
- der gesprochene, gesuchte Listeneintrag mit den Listeneinträgen der Auswahlliste verglichen wird,
- bei hinreichender Übereinstimmung zwischen dem gesprochenen, gesuchten Listeneintrag und mindestens einem der Listeneinträge aus der Auswahlliste dieser mindestens eine Listeneintrag als Suchergebnis ausgewählt wird,
- automatisch in den manuellen Eingabemodus umgeschaltet wird, wenn keine hinreichende Übereinstimmung zwischen dem gesprochenen, gesuchten Listeneintrag mit mindestens einem der Listeneinträge der Auswahlliste besteht, **dadurch gekennzeichnet, dass** das gesprochene Wort vor dem automatischen Umschalten in den manuellen Eingabemodus abgespeichert wird und ein Vergleich des abgespeicherten Spracheingabesignals mit denjenigen Listeneinträgen der Auswahlliste durchgeführt wird, deren Anfangsbestandteil mit der manuell eingegebenen Zeichenkette übereinstimmt, wenn die Anzahl der so ermittelten Listeneinträge kleiner als ein Vorgabewert ist, und bei hinreichender Übereinstimmung mit einem der Listeneinträge der Auswahlliste dieser Listeneintrag ausgewählt wird und ein Hinweis auf die Auswahl optisch oder akustisch ausgegeben wird.

2. Verfahren nach Anspruch 1, **dadurch gekennzeichnet, dass** im manuellen Eingabemodus der gesuchte Listeneintrag mittels einer Handschrifteingabevorrichtung oder einer Tastatur zeichenweise eingegeben wird.

3. Verfahren nach Anspruch 2, **dadurch gekennzeichnet, dass** nach Eingabe jedes Zeichens eine optische oder akustische Rückmeldung erfolgt.

4. Verfahren nach einem der vorhergehenden Ansprüche, **dadurch gekennzeichnet, dass**
- eine bereits manuell eingegebene Zeichenkette automatisch mit den Listeneinträgen der Auswahlliste verglichen wird,
- die Anzahl M der Listeneinträge ermittelt wird, die die eingegebene Zeichenkette als Anfangsbestandteil enthält,
- ermittelt wird, ob die Anzahl M kleiner als ein Vorgabewert X und größer als 1 ist und falls dies zutreffend ist
- die Listeneinträge, die die eingegebene Zeichenkette als Anfangsbestandteil enthalten, auf einer optischen Anzeigevorrichtung zur Auswahl angeboten werden und / oder in den Spracheingabemodus umgeschaltet wird.

5. Informations- oder Unterhaltungssystem (1), insbesondere eines Kraftfahrzeugs, mit einem Speichermodul (2) zur Speicherung einer Vielzahl von Listeneinträgen, einer manuellen Eingabevorrichtung (3b) zur manuellen Eingabe eines gesuchten Listeneintrags, einer Spracheingabe- (3a) und einer Sprachverarbeitungsvorrichtung (7a), einem Umschaltmodul (9) zum manuellen Umschalten zwischen einem manuellen Eingabemodus und einem Spracheingabemodus und einem Auswahlmodul (4) zur Auswahl eines der Listeneinträge anhand des zumindest teilweise über die manuelle Eingabevorrichtung (3b) oder die Spracheingabevorrichtung (3a) eingegebenen gesuchten Listeneintrags, wobei das Sprachverarbeitungsmodul (7a) zur Verarbeitung eines gesprochenen Worts und das Umschaltmodul (9) auch für eine automatische Umschaltung zwischen dem Spracheingabemodus und dem manuellen Eingabemodus ausgelegt ist, **gekennzeichnet durch**
- Mittel zur Abspeicherung des gesprochenen Wortes vor dem automatischen Umschalten in den manuellen Eingabemodus,
- Mittel zur Durchführung eines Vergleichs des abgespeicherten Spracheingabesignals mit denjenigen Listeneinträgen der Auswahlliste, deren Anfangsbestandteil mit der manuell eingegebenen Zeichenkette übereinstimmt, wenn die Anzahl der so ermittelten Listeneinträge kleiner als ein Vorgabewert ist, und
- Mittel zur Auswahl eines Listeneintrages bei hinreichender Übereinstimmung mit einem der Listeneinträge der zuvor eingeschränkten Auswahlliste und
- Mittel zur Ausgabe eines optischen oder akustischen Hinweises auf die Auswahl.

6. Informations- oder Unterhaltungssystem nach Anspruch 5, **dadurch gekennzeichnet, dass** die manuelle Eingabevorrichtung (3b) eine Handschrifterkennungsvorrichtung ist.

7. Informations- oder Unterhaltungssystem nach einem der vorhergehenden Ansprüche 5 oder 6, **dadurch gekennzeichnet, dass** die Handschrifterkennungsvorrichtung eine berührungsempfindliche Fläche aufweist.

8. Informations- oder Unterhaltungssystem nach Anspruch 7, **dadurch gekennzeichnet, dass** die berührungsempfindliche Fläche in einen Drehsteller integriert ist.

9. Informations- oder Unterhaltungssystem nach Anspruch 7, **dadurch gekennzeichnet, dass** das Informations- oder Unterhaltungssystem eine Anzeigevorrichtung aufweist und die berührungsempfindliche Fläche in die Anzeigevorrichtung integriert ist, insbesondere in Form eines Touch-Screens.

10. Informations- oder Unterhaltungssystem nach einem der vorhergehenden Ansprüche 5-9, **dadurch gekennzeichnet, dass** das Informations- oder Unterhaltungssystem ein Navigationssystem ist oder enthält und die Listeneinträge Ortsangaben sind.

11. Informations- oder Unterhaltungssystem nach einem der vorhergehenden Ansprüche 6-10, **dadurch gekennzeichnet, dass** das Informations- oder Unterhaltungssystem ein Audio- und/oder Videosystem ist oder enthält und die Listeneinträge Senderfrequenzen oder Sendernamen oder Telefonnummern oder Musik- bzw. Videotitel sind.

12. Informations- oder Unterhaltungssystem nach einem der vorhergehenden Ansprüche 5-11, **dadurch gekenn zeichnet** , dass es sich um ein Informationssystem für öffentliche Verkehrsmittel oder für Touristen handelt.

13. Informations- oder Unterhaltungssystem nach einem der vorhergehenden Ansprüche 5-11, **dadurch gekennzeichnet, dass** es sich um ein Bankinformationssystem handelt.

## Claims

1. Method for selecting a list item from a selection list, in particular in an information or entertainment system in a motor vehicle, a list item which is sought either being input by means of voice input in a voice input mode or being manually input in a manual input mode,
- the list item sought being input as a spoken word in the voice input mode,
- the spoken list item sought being compared with the list items in the selection list,
- given sufficient correspondence between the spoken list item sought and at least one of the list items from the selection list, this at least one list item being selected as a search result,
- the system automatically changing over to the manual input mode if there is no sufficient correspondence between the spoken list item sought and at least one of the list items in the selection list, **characterized in that** the spoken word is stored before the system automatically changes over to the manual input mode and the stored voice input signal is compared with those list items in the selection list whose initial part corresponds to the character string which has been manually input if the number of list items determined in this manner is less than a prescribed value and, given sufficient correspondence to one of the list items in the selection list, this list item is selected and an indication of the selection is optically or acoustically output.

2. Method according to Claim 1, **characterized in that** the list item sought is input character by character using a handwriting input apparatus or a keypad in the manual input mode.

3. Method according to Claim 2, **characterized in that** there is optical or acoustic feedback after each character has been input.

4. Method according to one of the preceding claims, **characterized in that**
- a character string which has already been manually input is automatically compared with the list items in the selection list,
- the number M of list items containing the input character string as an initial part is determined,
- the system determines whether the number M is less than a prescribed value X and greater than 1, and if this is true,
- the list items containing the input character string as an initial part are offered for selection on an optical display apparatus and/or the system changes over to the voice input mode.

5. Information or entertainment system (1), especially in a motor vehicle, having a memory module (2) for storing a multiplicity of list items, a manual input apparatus (3b) for manually inputting a list item sought, a voice input apparatus (3a) and a voice processing apparatus (7a), a changeover module (9) for manually changing over between a manual input mode and a voice input mode, and a selection module (4) for selecting one of the list items using the list item which is sought and has been at least partially input using the manual input apparatus (3b) or the voice input apparatus (3a), the voice processing module (7a) being designed to process a spoken word and the changeover module (9) also being designed to automatically change over between the voice input mode and the manual input mode, **characterized by**
- means for storing the spoken word before automatically changing over to the manual input mode,
- means for comparing the stored voice input signal with those list items in the selection list whose initial part corresponds to the character string which has been manually input if the number of list items determined in this manner is less than a prescribed value, and
- means for selecting a list item given sufficient correspondence to one of the list items in the previously restricted selection list, and
- means for outputting an optical or acoustic indication of the selection.

6. Information or entertainment system according to claim 5, **characterized in that** the manual input apparatus (3b) is a handwriting recognition apparatus.

7. Information or entertainment system according to either of the preceding claims 5 and 6, **characterized in that** the handwriting recognition apparatus has a touch-sensitive surface.

8. Information or entertainment system according to claim 7, **characterized in that** the touch-sensitive surface is integrated in a rotary controller.

9. Information or entertainment system according to claim 7, **characterized in that** the information or entertainment system has a display apparatus and the touch-sensitive surface is integrated in the display apparatus, in particular in the form of a touchscreen.

10. Information or entertainment system according to one of the preceding claims 5-9, **characterized in that** the information or entertainment system is or contains a navigation system and the list items are statements of the location.

11. Information or entertainment system according to one of the preceding claims 6-10, **characterized in that** the information or entertainment system is or contains an audio and/or video system and the list items are transmitter frequencies or transmitter names or telephone numbers or music or video titles.

12. Information or entertainment system according to one of the preceding claims 5-11, **characterized in that** it is an information system for public transport or for tourists.

13. Information or entertainment system according to one of the preceding claims 5-11, **characterized in that** it is a bank information system.

## Revendications

1. Procédé permettant de sélectionner une inscription dans une liste de sélection, notamment dans un système d'information ou de divertissement d'un véhicule automobile, où, au choix, une inscription recherchée est entrée en mode de saisie vocale par une entrée parlée ou en mode de saisie manuelle par une entrée manuelle, au cours duquel,
- en mode de saisie vocale, l'inscription recherchée est saisie sous la forme d'un mot articulé,
- l'inscription recherchée et articulée est comparée aux inscriptions contenues dans la liste de sélection,
- en cas de concordance suffisante entre l'inscription recherchée et articulée et au moins une des inscriptions contenues dans la liste de sélection, cette au moins une inscription est sélectionnée comme résultat de la recherche,
- on passe automatiquement en mode de saisie manuelle, lorsqu'il n'y a pas de concordance suffisante entre l'inscription recherchée et articulée et au moins une des inscriptions contenues dans la liste de sélection,
**caractérisé par le fait que** le mot articulé est mémorisé avant le passage automatique en mode de saisie manuelle et une comparaison est effectuée entre le signal de saisie vocale mémorisé et les inscriptions de la liste de sélection dont la première partie concorde avec la séquence de caractères saisie manuellement, lorsque le nombre des inscriptions ainsi déterminées est inférieur à une valeur de référence et, dans le cas d'une concordance suffisante avec l'une des inscriptions de la liste de sélection, cette inscription est sélectionnée et une information indiquant la sélection est émise optiquement ou acoustiquement.

2. Procédé selon la revendication 1, **caractérisé par le fait que**, en mode de saisie manuelle, l'inscription recherchée est saisie signe par signe au moyen d'un dispositif de saisie de texte écrit à la main ou au moyen d'un clavier.

3. Procédé selon la revendication 2, , **caractérisé par le fait que**, après la saisie de chaque caractère, un accusé de réception optique ou acoustique est édité.

4. Procédé selon l'une des revendications précédentes, **caractérisé par le fait que**
- une séquence de caractères déjà saisie manuellement est automatiquement comparée aux inscriptions de la liste de sélection,
- on détermine le nombre M des inscriptions de la liste qui renferment la séquence de caractères en tant que première partie,
- on détermine si le nombre M est inférieur à une valeur de référence X et supérieur à 1 et, si c'est le cas,
- les inscriptions qui renferment la séquence de caractères en tant que première partie sont offertes pour une sélection sur un dispositif d'affichage optique et/ou on passe en mode de saisie vocale.

5. Système d'information ou de divertissement (1), notamment dans un véhicule automobile, comportant un module de mémorisation (2) permettant de mémoriser une pluralité d'inscriptions de la liste, un dispositif de saisie manuelle (3b) permettant de saisir manuellement une inscription recherchée, un dispositif de saisie vocale (3a) et un dispositif de traitement de la parole (7a), un module de commutation (9) permettant de commuter manuellement entre un mode de saisie manuelle et un mode de saisie vocale et un module de sélection (4) permettant de sélectionner l'une des inscriptions de la liste à l'aide de l'inscription recherchée et au moins partiellement saisie par l'intermédiaire du dispositif de saisie manuelle (3b) ou du dispositif de saisie vocale (3a), où le module de traitement de la parole (7a) est conçu pour le traitement d'un mot prononcé et le module de commutation (9) est également conçu pour un passage automatique entre le mode de saisie vocale et le mode de saisie manuelle, **caractérisé par**
- des moyens permettant de mémoriser le mot articulé avant le passage automatique en mode de saisie manuelle,
- des moyens permettant de procéder à une comparaison entre le signal de saisie vocale mémorisé et les inscriptions dans la liste de sélection dont la première partie concorde avec la séquence de caractères saisie manuellement, lorsque le nombre des inscriptions ainsi déterminées est inférieur à une valeur de référence et
- des moyens permettant de sélectionner une inscription lors d'une concordance suffisante avec l'une des inscriptions de la liste de sélection qui a été limitée auparavant et
- des moyens permettant, à la suite de la sélection, d'éditer une information optique ou acoustique.

6. Système d'information ou de divertissement selon la revendication 5, **caractérisé par le fait que** le dispositif de saisie manuelle (3b) est un dispositif de reconnaissance de texte écrit à la main.

7. Système d'information ou de divertissement selon l'une des revendications 5 ou 6, **caractérisé par le fait que** le dispositif de reconnaissance de texte écrit à la main comporte une surface tactile.

8. Système d'information ou de divertissement selon la revendication 7, **caractérisé par le fait que** la surface tactile est intégrée dans une manette tournante.

9. Système d'information ou de divertissement selon la revendication 7, **caractérisé par le fait que** le système d'information ou de divertissement comporte un dispositif d'affichage et que la surface tactile est intégrée dans le dispositif d'affichage, notamment sous la forme d'un écran tactile ou "touchscreen".

10. Système d'information ou de divertissement selon l'une des revendications 5 - 9, **caractérisé par le fait que** le système d'information ou de divertissement est un système de navigation ou comprend un système de navigation et que les inscriptions dans la liste sont des indications de lieux.

11. Système d'information ou de divertissement selon l'une des revendications 6 - 10, **caractérisé par le fait que** le système d'information ou de divertissement est un système audio et/ou un système de vidéo ou comprend un système audio et/ou un système de vidéo et que les inscriptions dans la liste sont des fréquences d'émetteurs ou des noms d'émetteurs ou des numéros de téléphone ou des titres de morceaux de musique ou des titres de vidéos.

12. Système d'information ou de divertissement selon l'une des revendications 5 - 11, **caractérisé par le fait qu'**il s'agit d'un système d'information pour les transports en commun ou pour les touristes.

13. Système d'information ou de divertissement selon l'une des revendications 5 - 11, **caractérisé par le fait qu'**il s'agit d'un système d'information pour les banques.
